# EUROPÄISCHE PATENTSCHRIFT

(11) **EP 1 963 815 B1**
(45) Veröffentlichungstag und Bekanntmachung des Hinweises auf die Patenterteilung: **01.06.2016**
(21) Anmeldenummer: 06829042.8
(22) Anmeldetag: 14.11.2006
(51) Int. Cl.: G01N 1/28, G01N 1/04

(54) **LASER-MIKRODISSEKTIONSVERFAHREN, STEUERSYSTEM FÜR EINE LASER-MIKRODISSEKTIONSVORRICHTUNG UND TRÄGERVORRICHTUNG**
LASER MICRODISSECTION METHOD, CONTROL SYSTEM FOR A LASER MICRODISSECTION DEVICE, AND SUPPORT DEVICE
PROCÉDÉ DE MICRODISSECTION AU LASER, SYSTÈME DE COMMANDE D'UN DISPOSITIF DE MICRODISSECTION AU LASER ET DISPOSITIF DE SUPPORT

(30) Priorität: 22.12.2005 DE 102005061561
(43) Veröffentlichungstag der Anmeldung: 03.09.2008
(73) Patentinhaber: Carl Zeiss Microscopy GmbH, 07745 Jena (DE)
(72) Erfinder: SÄGMÜLLER, Bernd, 69514 Laudenbach (DE); BURGEMEISTER, Renate, 85737 Ismaning (DE); NIYAZ, Yilmaz, 86159 Augsburg (DE)
(74) Vertreter: Banzer, Hans-Jörg
(86) Internationale Anmeldenummer: PCT/EP2006/010912
(87) Internationale Veröffentlichungsnummer: WO 2007/079810

(56) Entgegenhaltungen:
- WO-A-02/14833
- WO-A-2004/019007
- WO-A-2005/057178
- WO-A-2005/106423
- WO-A2-02/10751
- US-A- 5 356 751
- US-A1- 2004 185 522
- EMMERT-BUCK M R ET AL: "LASER CAPTURE MICRODISSECTION" SCIENCE, AMERICAN ASSOCIATION FOR THE ADVANCEMENT OF SCIENCE,, US, Bd. 274, Nr. 5289, 8. November 1996 (1996-11-08), Seiten 998-1001, XP000644727 ISSN: 0036-8075
- EISENBERGER S ET AL: "High-quality RNA preparation for transcript profiling of osteocytes from native human bone microdissections" ANALYTICAL BIOCHEMISTRY, ACADEMIC PRESS, NEW YORK, NY, US, Bd. 335, Nr. 2, 15. Dezember 2004 (2004-12-15), Seiten 260-266, XP004642084 ISSN: 0003-2697

## Beschreibung

Die vorliegende Erfindung betrifft ein Laser-Mikrodissektionsverfahren zur Separierung und zur Gewinnung von Objekten eines Präparats, insbesondere eines biologischen Präparats, sowie ein Steuersystem für eine Laser-Mikrodissektionsvorrichtung und eine Trägervorrichtung zur Aufnahme des Präparats. Insbesondere betrifft die vorliegende Erfindung ein Laser-Mikrodissektionsverfahren und Laser-Mikrodissektionssystem zur Gewinnung kleiner, mittlerer und großer Mikrodissektatmengen.

Ein herkömmliches Laser-Mikrodissektionssystem der Anmelderin ist beispielsweise aus der WO 97/29355 A oder aus der WO 01/73398 A bekannt. Dieses Laser-Mikrodissektionssystem erlaubt die rechnergestütze Selektierung einzelner biologischer oder nicht-biologischer Objekte, die auf einem planaren Träger angeordnet sind, und deren Bearbeitung mit einem Laserstrahl. Insbesondere können die Objekte durch die Bearbeitung mit dem Laserstrahl zu einer oder mehreren Auffangvorrichtungen transportiert werden. Mehrere direkt oder indirekt durch den Laserstrahl induzierte Transportprozesse sind möglich und in den genannten Druckschriften beschrieben. Beispielsweise kann ein selektiertes Objekt mit dem Laserstrahl ganz oder teilweise von dem umgebenden Präparat abgetrennt und somit freipräpariert werden. Anschließend kann das freipräparierte Objekt mit einem laserinduzierten Transportprozess mit Hilfe eines Laserimpulses, der auf das Objekt gerichtet wird, von dem Träger zu einer Auffangvorrichtung hin beschleunigt oder "katapultiert" werden. Ist das Objekt nicht vollständig freipräpariert, sondern noch mit einem Reststeg mit dem umgebenden Präparat verbunden, kann mit Hilfe des Laserimpulses sowohl der Reststeg durchtrennt als auch das Objekt zu der Auffangvorrichtung katapultiert werden.

Der laserinduzierte Transportprozess kann prinzipiell auch ohne eine vorhergehende Freipräparation des jeweils selektierten Objekts realisiert werden, falls die Laserenergie und/oder die Größe des Laserfokus an dem Präparat derart gewählt wird bzw. werden, dass die auf das Objekt wirkende Kraft ausreicht, um das Objekt sowohl aus dem Präparat herauszulösen als auch zu der Auffangvorrichtung zu beschleunigen.

Die oben genannten Druckschriften WO 97/29355 A und WO 01/73398 A sowie die US 2004/0185522 A1 offenbaren jeweils Mikrodissektionsverfahren mit den Merkmalen des Oberbegriffs von Anspruch 1. Mikrodissektionsverfahren sind auch in der WO 2005/057178 A1, der US 5 356 751 A und dem Artikel "Laser Capture Microdissection", Science 274 (1996) 998-1001 von Michael R. Emmert-Buck et al. beschrieben.

Die WO 02/14833 A1, die als Basis für den Oberbegriff des Anspruchs 14 dient, offenbart eine Trägervorrichtung für ein Präparat mit einer Laserlicht absorbierenden Membran und einem die Membran stützenden Träger, an dem die Membran mit einem Klebeband befestigt ist. Trägervorrichtungen für Präparate sind auch aus der WO 02/10751 A2 und dem Artikel "High-quality RNA preparation for transcript profiling of osteocytes from native human bone microdissections", Analytical Biochemistry 335 (2004), 260-266, Elsevier von S. Eisenberger et al. bekannt.

Laser-Mikrodissektionssysteme ermöglichen ein Trennen und Entnehmen sowie eine Sortierung und Gewinnung sowohl von biologischen als auch von nicht biologischen Objekten. Insbesondere ermöglicht Laser-Mikrodissektion eine berührungsloses Trennen und Entnehmen biologischer Objekte, beispielsweise einzelner Zellen, von einem Präparat. Da die biologischen Objekte durch den Abtrenn- und Katapultierprozess nicht geschädigt oder beeinträchtigt werden, stehen sie nach dem Separieren und Entnehmen für weitere Untersuchungen zur Verfügung. So können beispielsweise Tumorzellen von gesunden Zellen eines Gewebeschnitts separiert und entnommen und anschließend untersucht werden.

Jedoch weisen herkömmliche Laser-Mikrodissektionssysteme und -verfahren den Nachteil auf, dass es häufig schwierig ist, eine größere Materialmengen eines Präparats zu separieren und zu entnehmen. Durch Abrastern einer größeren Fläche des Präparats ist es zwar möglich, eine größere Anzahl von Objekten des Präparats zu separieren und zu entnehmen. Jedoch ist die für das Abrastern der größeren Fläche und das Separieren und Entnehmen der größeren Anzahl von Objekten benötigte Zeit häufig lang. Darüber hinaus wird die Möglichkeit, eine größere Anzahl von Objekten zu separieren und zu entnehmen, häufig auch durch die Aufnahmekapazität der Auffangvorrichtung begrenzt. Wird die Gesamtmasse oder das Gesamtvolumen von zu der Auffangvorrichtung transportierten Objekten zu groß, so können die transportierten Objekte möglicherweise nicht mehr in der Auffangvorrichtung gehalten werden und können verloren gehen.

Folglich ist es eine Aufgabe der vorliegenden Erfindung, ein verbessertes Laser-Mikrodissektionsverfahren und eine verbesserte Trägervorrichtung zur Verfügung zu stellen. Insbesondere ist es eine Aufgabe, ein Laser-Mikrodissektionsverfahren und eine Trägervorrichtung zur Verfügung zu stellen, welche es erlauben, auch eine größere Anzahl von Objekten des Präparats, d.h. einen größeren Abschnitt des Präparats zu separieren und zu entnehmen.

Erfindungsgemäß wird diese Aufgabe gelöst durch ein Mikrodissektionsverfahren nach Anspruch 1 und eine Trägervorrichtung nach Anspruch 14. Die abhängigen Ansprüche definieren bevorzugte oder vorteilhafte Ausführungsformen der Erfindung.

Ein erfindungsgemäßes Mikrodissektionsverfahren umfasst die Schritte Bereitstellen einer Trägervorrichtung mit einer laserlichtabsorbierenden Schnittschicht und einem Trägermittel zum Tragen der laserlichtabsorbierenden Schnittschicht, Anbringen eines Präparats, insbesondere eines biologischen Präparats, an der Schnittschicht, Auswählen eines zu separierenden Zielbereichs des Präparats, Schneiden des Präparats und der Schnittschicht entlang eines Randabschnitts des Zielbereichs durch Laserbestrahlung, um die Schnittschicht in wenigstens einen ausgeschnittenen Abschnitt und in einen nicht ausgeschnittenen Abschnitt zu unterteilen, und Abziehen des nicht ausgeschnittenen Abschnitts der Schnittschicht von dem Trägermittel. Dabei entspricht der Zielbereich des Präparats der Gesamtheit von zu separierenden Objekten, welche ein einzelnes räumlich zusammenhängendes Gebiet oder eine Mehrzahl von jeweils räumlich zusammenhängenden Gebieten definieren kann. Die Schnittschicht kann eine Schnittmembran oder eine aufgedampfte oder aufgesputterte Schicht sein, beispielsweise eine Metallschicht oder ein durch ein Tauchbad aufgebrachter Polyalkohol. Da das Separieren und Entnehmen des Zielbereichs durch ein Schneiden durch Laserbestrahlung mit einem nachfolgenden Abziehen des nicht ausgeschnittenen Abschnitts der Schnittschicht erfolgt, ist es nach dem Verfahren zwar möglich, aber nicht mehr unbedingt nötig, Objekte laserinduziert von dem Präparat zu einer Auffangvorrichtung zu transportieren. Ein Separieren und Entnehmen von kleinen, mittleren und großen Mikrodissektatmengen ist möglich.

Das Schneiden des Präparats und der Schnittschicht kann derart erfolgen, dass der Zielbereich und die unter- bzw. überhalb desselben angeordneten Abschnitte der Schnittschicht ausgeschnitten werden. In diesem Fall ist der Zielbereich an dem ausgeschnitten Abschnitt oder den ausgeschnittenen Abschnitten der Schnittschicht angeordnet und verbleibt, wenn der nicht ausgeschnittene Abschnitt der Schnittschicht von dem Trägermittel abgezogen wird, zusammen mit dem ausgeschnittenen Abschnitt oder den ausgeschnitenen Abschnitten der Schnittschicht an dem Trägermittel. Eine derartige Ausgestaltung des Verfahrens ist insbesondere dann vorteilhaft, wenn der Zielbereich mehrere voneinander getrennte Gebiete aufweist oder eine Fläche einnimmt, welche im Vergleich mit der Fläche der Bereiche des Präparats, welche nicht zum Zielbereich gehören, klein ist. Die an dem Trägermittel verbliebenen Abschnitte des Präparats, d.h. der Zielbereich, können zu einer weiteren Bearbeitung von dem Trägermittel abzentrifugiert werden. Dazu wird bevorzugt das Trägermittel zusammen mit den darauf angeordneten ausgeschnittenen Abschnitten der Schnittschicht und dem Zielbereich des Präparats aufgerollt, in ein Zentrifugenröhrchen eingeführt und dann zentrifugiert. Weiter kann dabei eine Schnittschicht, beispielsweise eine Schnittmembran oder eine andere Schicht, verwendet werden, welche sich in dem Zielgefäß auflöst.

Das Schneiden des Präparats und der Schnittschicht kann auch derart erfolgen, dass nicht zum Zielbereich gehörende Abschnitte des Präparats zusammen mit unter- bzw. überhalb dieser Abschnitte angeordneten Abschnitten der Schnittschicht ausgeschnitten werden. In diesem Fall ist der Zielbereich an dem nicht ausgeschnittenen Abschnitt der Schnittschicht angeordnet und wird zusammen mit diesem von dem Trägermittel abgezogen. Eine derartige Ausgestaltung des Verfahrens ist insbesondere dann vorteilhaft, wenn der Zielbereich ein einzelnes, zusammenhängendes Gebiet umfasst, das auch eine Insel oder mehrere Inseln von nicht zum Zielbereich gehörenden Abschnitten des Präparats räumlich umgeben kann. Da die nicht zum Zielbereich gehörenden Abschnitte des Präparats beim Abziehen des nicht ausgeschnittenen Abschnitts der Schnittschicht an dem Trägermittel verbleiben, wird auch in diesem Fall ein Separieren und Entnehmen des Zielbereichs erreicht.

Unabhängig davon, ob der Zielbereich oder die nicht zum Zielbereich gehörenden Abschnitte des Präparats ausgeschnitten wird bzw. werden, kann das Abziehen des nicht ausgeschnittenen Abschnitts der Schnittschicht insbesondere dadurch realisiert werden, dass der nicht ausgeschnittene Abschnitt der Schnittschicht von dem Trägermittel manuell abgezogen wird. Das Abziehen kann auch maschinell erfolgen. Durch das Abziehen wird der Zielbereich mechanisch von den nicht zum Zielbereich gehörenden Abschnitten des Präparats abgetrennt. Da der nicht ausgeschnittene Abschnitt der Schnittschicht als Ganzes abgezogen wird, kann dieser Verfahrensschritt verhältnismäßig schnell durchgeführt werden.

Das Trägermittel kann ein erstes Stützmittel und ein zweites Stützmittel umfassen, wobei die Trägervorrichtung derart ausgestaltet ist, dass das erste Stützmittel im Wesentlichen zwischen dem zweiten Stützmittel und der Schnittschicht angeordnet ist. Das Verfahren kann dann den weiteren Schritt Abziehen des ersten Stützmittels von dem zweiten Stützmittel umfassen. Da bei dieser Ausgestaltung der Trägervorrichtung der ausgeschnittene Abschnitt oder die ausgeschnittenen Abschnitte der Schnittschicht zusammen den korrespondierenden ausgeschnittenen Abschnitten des Präparats nach dem Abziehen der Schnittschicht an dem ersten Stützmittel verbleiben, kann der ausgeschnittene Abschnitt oder können die ausgeschnittenen Abschnitte des Präparats durch das Abziehen des ersten Stützmittels von dem zweiten Stützmittel einfacher einer weiteren Bearbeitung oder Analyse zugeführt werden.

Ein zum Schneiden des Präparats und der Schnittschicht eingesetzter Laserstrahl kann sowohl auf der Seite der Schnittschicht als auch auf der Seite des Trägermittels auf die Trägervorrichtung eingestrahlt werden. Im letzteren Fall muss jedoch das Trägermittel wenigstens in dem Spektralbereich des Laserstrahls transparent sein. Somit kann das erfindungsgemäße Verfahren sowohl in einem aufrechten Mikroskop als auch in einem inversen Mikroskop angewandt werden, so dass es in vielfältigen Systemen durchgeführt werden kann.

Unabhängig davon, ob der Zielbereich mit dem nicht ausgeschnittenen Abschnitt der Schnittschicht abgezogen wird oder an dem Trägermittel verbleibt, kann der Zielbereich des Präparats, d.h. die in ihm enthaltenen Objekte des Präparats, auf vielfältige Weise weiter bearbeitet werden. Wie bereits oben erwähnt, kann der Zielbereich abzentrifugiert werden. Darüber hinaus kann beispielsweise ein Abdruck des Zielbereichs mittels eines Verdau-Gels einer Festphasenextraktion eluiert werden oder auf den Zielbereich können, auf dem Trägermittel oder auf dem nicht ausgeschnittenen Abschnitt der Schnittschicht, direkt Prozesschemikalien aufgebracht werden. Das Gewebe der im Zielbereich enthaltenen Objekte des Präparats kann dann beispielsweise lysiert und weiter analysiert werden, z.B. mit nano-Liquid-Chromatography oder mit massenspektroskopischen Methoden.

Nach dem erfindungsgemäßen Verfahren wird entweder der Zielbereich des Präparats oder werden die nicht im Zielbereich enthaltenen Abschnitte des Präparats durch Laserbestrahlung ausgeschnitten, wobei die Entscheidung darüber, ob der Zielbereich oder die nicht im Zielbereich enthaltenen Abschnitte auszuschneiden ist bzw. sind benutzerdefiniert oder automatisch von einem Steuersystem eines Laser-Mikrodissektionssystems getroffen werden kann.

Eine erfindungsgemäße Trägervorrichtung umfasst ein Trägermittel und eine laserlichtabsorbierende Schnittschicht, wobei die Schnittschicht derart an dem Trägermittel angebracht ist, dass sie in einer Richtung mit einer vertikalen Komponente von dem Trägermittel abziehbar ist, also vertikal oder in einem angestellten Winkel abgezogen oder abgerollt werden kann. Bei Einstrahlung eines Laserstrahls wird nur die Schnittschicht geschnitten, so dass bei einer Verwendung der erfindungsgemäßen Trägervorrichtung bestimmte Bereiche der Schnittschicht ausgeschnitten werden, das Trägermittel dabei aber nicht geschnitten wird. Insbesondere ist die Trägervorrichtung derart ausgestaltet, dass nach dem Ausschneiden eines Abschnitts oder mehrerer Abschnitte der Schnittschicht ein nicht ausgeschnittener Abschnitt der Schnittschicht von dem Trägermittel abgezogen werden kann, wobei der ausgeschnittene Abschnitt oder die ausgeschnittenen Abschnitte der Schnittschicht an dem Trägermittel verbleiben. Eine derartige Trägervorrichtung kann bei dem erfindungsgemäßen Mikrodissektionsverfahren eingesetzt werden und ermöglicht somit das Separieren und die Entnahme kleiner, mittlerer und großer Mengen von Objekten des Präparats.

Zwischen der Schnittschicht und dem Trägermittel ist eine Schicht eines Gleitmittels, beispielsweise Glycerin, vorgesehen. Bei anderen Ausführungsbeispielen ist zwischen der Schnittschicht und dem Trägermittel eine Schicht eines Polyalkohols oder einer Mischung mehrerer Polyalkoholen vorgesehen. Eine derartige Schicht kann mehreren Zwecken dienen. Beispielsweise kann sie ein Abzentrifugieren des ausgeschnittenen Abschnitts oder der ausgeschnittenen Abschnitte der Schnittschicht von dem Trägermittel und/oder das Abziehen des nicht ausgeschnittenen Abschnitts der Schnittschicht von dem Trägermittel erleichtern. Darüber hinaus kann sie auch dem Zweck dienen, den ausgeschnittenen Abschnitt oder die ausgeschnittenen Abschnitte der Schnittschicht an dem Trägermittel zu halten, wenn der nicht ausgeschnittene Abschnitt der Schnittschicht von diesem abgezogen wird.

Bei einem anderen Ausführungsbeispiel kontaktiert die Schnittschicht direkt das Trägermittel, und die Schnittschicht und das Trägermittel werden durch Adhäsionskräfte zusammengehalten.

Bei einem bevorzugten Ausführungsbeispiel kann die Schnittschicht ein Material umfassen oder ausgebildet sein aus einem Material, welches ausgewählt ist aus der Gruppe bestehend aus Polyethylennaphtalat (PEN), Polyethylenterephtalat (PET) oder Polyester (POL). Die Schnittschicht kann eine Dicke von beispielsweise 1,25 µm aufweisen.

Das Trägermittel kann insbesondere wiederum eine Doppel- oder Mehrschichtstruktur aufweisen. Insbesondere kann das Trägermittel ein erstes Stützmittel und ein zweites Stützmittel umfassen, wobei die Trägervorrichtung derart ausgestaltet ist, dass das erste Stützmittel im Wesentlichen zwischen dem zweiten Stützmittel und der Schnittschicht angeordnet ist. Das erste Stützmittel ist bevorzugt derart an dem zweiten Stützmittel angebracht, dass es von diesem abgezogen werden kann. Eine derartige Ausgestaltung des Trägermittels kann eine weitere Bearbeitung von ausgeschnittenen Abschnitten des Präparats erleichtern, da das erste Stützmittel, an welchem die ausgeschnittenen Abschnitte des Präparats zusammen mit den ausgeschnittenen Abschnitten der Schnittschicht angeordnet sind, von dem zweiten Stützmittel abgezogen werden kann. Zwischen dem ersten Stützmittel und dem zweiten Stützmittel kann wiederum eine Schicht Glycerin oder eine Schicht eines Polyalkohols vorgesehen sein.

Das erste und/oder das zweite Stützmittel kann eine aus Polytetrafluorethylen (PTFE) ausgebildete Membran bzw. Folie sein. Das zweite Stützmittel kann auch eine Glasplatte, beispielsweise ein Objektträger aus der Mikroskoptechnik sein. Im letzteren Fall kann die Trägervorrichtung eine aus der Schnittschicht und dem ersten Stützmittel ausgebildete Doppelschicht-Membran sowie die Glasplatte umfassen, an welcher die Doppelschicht-Membran durch Adhäsion oder mittels einer zwischengelagerten Glycerinschicht oder eines geeigneten Klebstoffs angebracht ist.

An der Schnittschicht kann ein Ansatz vorgesehen sein, um ein Abziehen der Schnittschicht von dem Trägermittel zu erleichtern. Dieser Ansatz kann lateral über einen Rand des Trägermittels hervorragen oder aus einem Material ausgebildet sein, welches nicht an dem Trägermittel anhaftet. So wird sichergestellt, dass der Ansatz leicht manuell ergriffen und die Schnittschicht von dem Trägermittel abgezogen werden kann. Ähnlich kann, wenn das Trägermittel ein erstes Stützmittel und ein zweites Stützmittel umfasst, an dem ersten Stützmittel ein Ansatz vorgesehen sein, um ein Abziehen des ersten Stützmittels von dem zweiten Stützmittel zu erleichtern.

Die Schnittschicht und das Trägermittel sind nicht notwendig mit einer zwischengelagerten Glycerinschicht verbunden. Vielmehr können die Schnittschicht und das Trägermittel auch durch Adhäsion oder durch einen zwischen sie eingebrachten Klebstoff zusammengehalten werden. Im letzteren Fall muss jedoch sichergestellt werden, dass die Schnittschicht noch von dem Trägermittel abgezogen werden kann.

Das erfindungsgemäße Mikrodissektionsverfahren und die erfindungsgemäße Trägervorrichtung können zum Separieren und zur Entnahme kleiner, mittlerer und großer Mikrodissektatmengen für biologische Untersuchungen eingesetzt werden. Insbesondere können das erfindungsgemäße Mikrodissektionsverfahren und die erfindungsgemäße Trägervorrichtung eingesetzt werden, um größere Mengen eines Substrats in verhältnismäßig kurzer Zeit aus dem Präparat zu gewinnen und für weitere Untersuchungen, beispielsweise in der Proteomik oder anderen Gebieten der Molekulargenetik, verwenden zu können. Das erfindungsgemäße Verfahren kann sowohl auf fixiertes und frisches Gewebe als auch auf lebende Zellen angewandt werden.

Bevorzugte Ausführungsbeispiele der Erfindung werden nachfolgend unter Bezugnahme auf die Figuren erläutert.
Figur 1 veranschaulicht schematisch das Prinzip eines Mikrodissektionsverfahrens nach einem Ausführungsbeispiel der Erfindung, wobei Fig. 1A einen Zustand vor und Fig. 1B einen Zustand nach einem Abziehen einer Schnittschicht von einem Trägermittel zeigt.
Figur 2 veranschaulicht ein Mikrodissektionsverfahren nach einer Variante des in Fig. 1 gezeigten Ausführungsbeispiels, wobei Fig. 2A den Zustand vor und Fig. 2B den Zustand nach dem Abziehen der Schnittschicht von dem Trägermittel zeigt.
Figur 3 veranschaulicht ein Mikrodissektionsverfahren nach einer Variante des in Fig. 1 gezeigten Ausführungsbeispiels, wobei Fig. 3A den Zustand vor und Fig. 3B den Zustand nach dem Abziehen der Schnittschicht von dem Trägermittel zeigt.
Figuren 4 und 5 veranschaulichen eine weitere Bearbeitung von mit einem erfindungsgemäßen Mikrodissektionsverfahren gewonnenen Mikrodissektaten.
Figur 6A-C zeigt verschiedene Ausführungsbeispiele einer erfindungsgemäßen Trägervorrichtung in einer Querschnittsansicht.
Figur 7 veranschaulicht die Verwendung einer Trägervorrichtung nach einem Ausführungsbeispiel der Erfindung bei einem erfindungsgemäßen Mikrodissektionsverfahren.

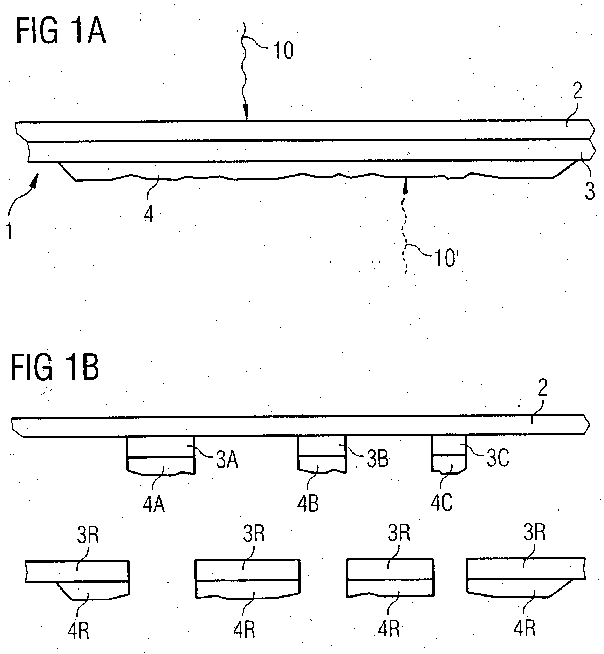

Zuerst wird unter Bezugnahme auf Figur 1 das Prinzip des erfindungsgemäßen Mikrodissektionsverfahrens erläutert. Figur 1 zeigt eine Trägervorrichtung 1, die aus einem Trägermittel 2 und einer laserlichtabsorbierenden Schnittmembran 3 besteht. Die Schnittmembran absorbiert das Licht eines auf die Trägervorrichtung eingestrahlten Laserstrahls 10 oder 10' derart, dass sie durch Laserbestrahlung geschnitten werden kann. Die Schnittmembran kann beispielsweise aus Polyethylennaphtalat (PEN), Polyethylenterephtalat (PET) oder Polyester (POL) ausgebildet sein und eine Dicke im Bereich einiger Mikrometer aufweisen, z.B. 1,25 µm.

Das Trägermittel 2 kann beispielsweise eine Glasplatte oder eine Membran aus Polytetrafluorethylen (PTFE) sein. Bevorzugt ist das Trägermittel 2 wenigstens in einem Spektralbereich des Laserstrahls 10 oder 10' transparent. In diesem Fall kann der Laserstrahl, wie der Laserstrahl 10, auf der Seite des Trägermittels 2 oder, wie der Laserstrahl 10', auf der Seite der Schnittmembran auf die Trägervorrichtung 10 eingestrahlt werden. Soll der Laserstrahl auf der Seite des Trägermittels 2 eingestrahlt werden können, muss das Trägermittel transparent sein.

An der Schnittmembran 3 ist ein biologisches Präparat 4 angebracht. Um eine bestimmte Menge gewünschter Objekte, beispielsweise Zellen von einem vorgegebenen Zelltyp, von dem Präparat zu separieren, wird ein Zielbereich des Präparats ausgewählt, welcher die gewünschten Objekte enthält. Die Auswahl des Zielbereichs kann insbesondere benutzerdefiniert oder teilweise oder vollständig automatisch erfolgen. In Abhängigkeit von dem ausgewählten Zielbereich führt ein Computer eine Positionsänderung der Trägervorrichtung 1 mit dem biologischen Präparat 4 relativ zu dem Laserstrahl 10 oder 10' herbei, so dass das Präparat 4 und die Schnittmembran 3 entlang einer Schnittlinie oder einer Mehrzahl von Schnittlinien, welche von dem Computer ermittelt werden, geschnitten werden.

Auf diese Weise werden Abschnitte 3A-C aus der Schnittmembran 3 ausgeschnitten, so dass die Schnittmembran 3 in die ausgeschnittene Abschnitte 3A-C und einen nicht ausgeschnittenen Abschnitt 3R unterteilt wird. Entsprechend werden aus dem Präparat 4 Abschnitte 4A-C ausgeschnitten, so dass auch das Präparat in ausgeschnittene Abschnitte 4A-C und einen nicht ausgeschnittenen Abschnitt 4R unterteilt wird. Dabei ist jeder der ausgeschnittenen Abschnitte 4A-C des Präparats an dem entsprechenden ausgeschnittenen Abschnitt 3A-C der Schnittmembran angeordnet.

Wie in Fig. 1B gezeigt, wird nach dem Schneiden des Präparats und der Schnittmembran der nicht ausgeschnittene Abschnitt 3R der Schnittmembran zusammen mit dem daran angeordneten, nicht ausgeschnittenen Abschnitt 4R des Präparats von dem Trägermittel 2 abgezogen. Insbesondere kann das Abziehen des nicht ausgeschnittenen Abschnitts 3R der Schnittmembran auch manuell erfolgen. Bei dem Abziehen des nicht ausgeschnittenen Abschnitts 3R der Schnittmembran von dem Trägermittel 2 verbleibt der nicht ausgeschnittene Abschnitt 4R des Präparats an dem nicht ausgeschnittenen Abschnitts 3R der Schnittmembran, während die ausgeschnittenen Abschnitte 4A-C des Präparats zusammen mit den ausgeschnittenen Abschnitten 3A-C der Schnittmembran an dem Trägermittel verbleiben. Sowohl der nicht ausgeschnittene Abschnitt 4R des Präparats als auch die ausgeschnittenen Abschnitte 4A-C des Präparats können einer weiteren Bearbeitung oder Analyse unterzogen werden, wie unten noch detaillierter ausgeführt werden wird.

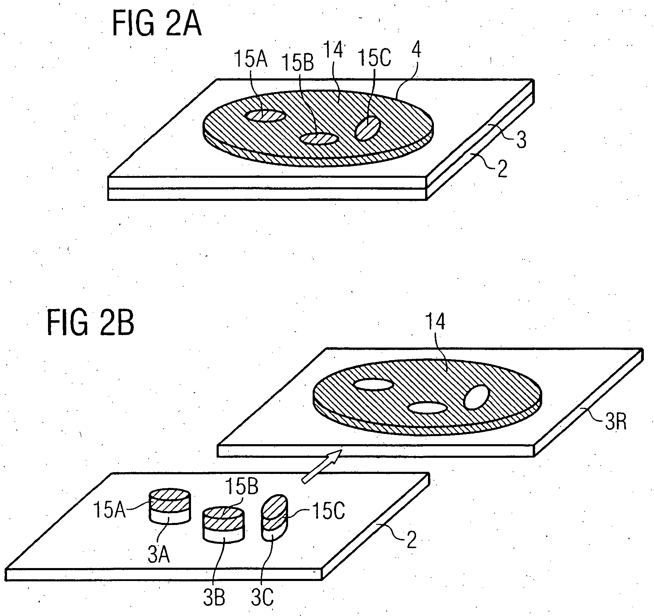

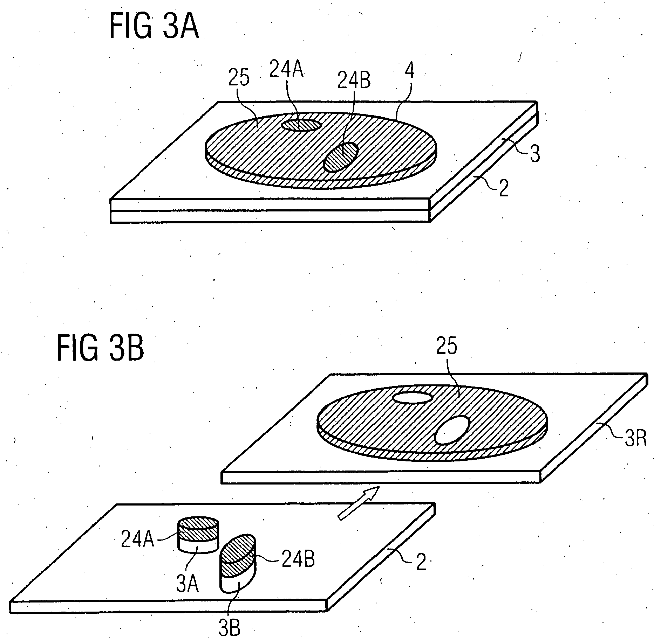

Wie unter Bezugnahme auf Figuren 2 und 3 als nächstes erläutert wird, stehen für das Separieren und das Entnehmen des Zielbereichs, welcher das biologische Material von Interesse umfasst, von dem Rest des Präparats prinzipiell zwei Möglichkeiten zur Verfügung. Und zwar kann entweder der Zielbereich selbst ausgeschnitten werden, so dass dieser nach dem Abziehen des nicht ausgeschnittenen Abschnitts 3R der Schnittmembran an dem Trägermittel 2 verbleibt, oder nicht im Zielbereich enthaltene Abschnitte des Präparats können ausgeschnitten werden, so dass der Zielbereich zusammen mit dem nicht ausgeschnittenen Abschnitt 3R der Schnittmembran von dem Trägermittel 2 abgezogen wird.

Der letztere Fall ist in Fig. 2 dargestellt. Der Zielbereich 14 ist in dem dargestellten Beispiel ein zusammenhängendes Gebiet, innerhalb dessen mehrere Inseln 15A-C von Objekten des Präparats angeordnet sind, welche nicht zu dem zu separierenden Zielbereich gehören. In diesem Fall wird das Mikrodissektionsverfahren bevorzugt derart ausgeführt, dass nicht der Zielbereich selbst, sondern die Inseln 15A-C von nicht zum Zielbereich gehörenden Objekten ausgeschnitten werden. Beim Abziehen des nicht ausgeschnittenen Abschnitts 3R der Schnittmembran, schematisch durch einen Pfeil dargestellt, wird der Zielbereich 14 zusammen mit dem nicht ausgeschnittenen Abschnitt 3R der Schnittmembran abgezogen und steht an diesem für eine weitere Analyse zur Verfügung. Die unerwünschten Objekte 15A-C verbleiben dagegen an dem Trägermittel 2.

Es sollte beachtet werden, dass bei dem in Fig. 2 dargestellten Ausführungsbeispiel der Erfindung das Präparat 4 und die Schnittmembran 3 nicht entlang des gesamten Rands des Zielbereichs 14 geschnitten werden, sondern nur entlang des Abschnitts des Rands des Zielbereichs 14, der die Inseln 15A-C umgibt.

Der Fall, dass der Zielbereich selbst ausgeschnitten wird, ist in Fig. 3 dargestellt. In diesem Fall umfasst der Zielbereich mehrere voneinander getrennte Regionen 24A und 24B, welche räumlich von einem nicht zum Zielbereich gehörenden Abschnitt 25 des Präparats umgeben sind. In diesem Fall werden die Regionen 24A und 24B des Zielbereichs ausgeschnitten. Wie in Fig. 3B gezeigt, verbleiben die Regionen 24A und 24B des Zielbereichs nach dem Abziehen des nicht ausgeschnittenen Abschnitts 3R der Schnittmembran an dem Trägermittel 2, zusammen mit den korrespondierenden ausgeschnittenen Abschnitten 3A und 3B der Schnittmembran. Der nicht im Zielbereich enthaltene Abschnitt 25 des Präparats wird zusammen mit dem nicht ausgeschnittenen Abschnitt 3R der Schnittmembran abgezogen. In dem in Fig. 3 dargestellten Fall wird das Präparat entlang des gesamten Rands des Zielbereichs 24A, 24B geschnitten.

Ob es zweckmäßig ist, den Zielbereich selbst oder die nicht im Zielbereich enthaltenen Abschnitte des Präparats auszuschneiden, kann entweder durch eine Eingabe eines Benutzers oder automatisch ermittelt werden. Insbesondere kann der Computer, welcher die Schnittlinien definiert, auf der Basis des ausgewählten Zielbereichs ermitteln, ob es vorteilhafter ist, den Zielbereich oder die nicht im Zielbereich enthaltenen Abschnitte des Präparats auszuschneiden. Kriterien dafür sind beispielsweise, wie in Fig. 2 und 3 ersichtlich, ob der Zielbereich ein geometrisch zusammenhängendes Gebiet ist, d.h. ob jeder Punkt des Zielbereichs von jedem anderen Punkt des Zielbereichs erreicht werden kann, ohne den Zielbereich verlassen zu müssen, oder ob der Zielbereich einen Anteil der Gesamtfläche des Präparats einnimmt, welcher einen vorgegebenen Schwellenwert übersteigt.

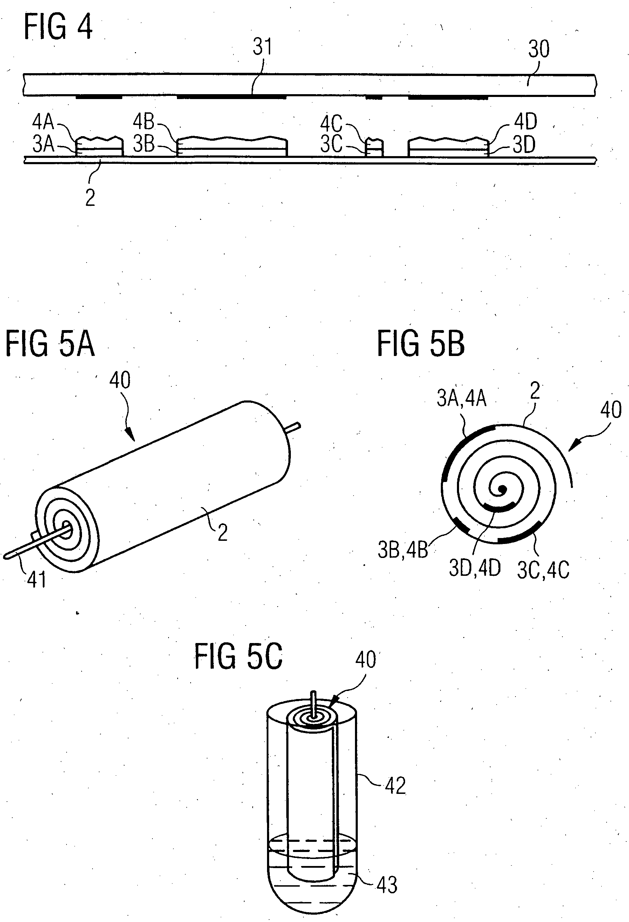

Wie nunmehr unter Bezugnahme auf Fig. 4 und 5 beispielhaft dargestellt wird, kann der Zielbereich nach dem Separieren und Entnehmen auf vielfältige Weise weiter bearbeitet oder analysiert werden. Für eine einfachere Darstellung werden diese Erläuterungen auf den Fall beschränkt, dass der Zielbereich selbst ausgeschnitten wird und somit nach dem Abziehen des nicht ausgeschnittenen Abschnitts 3R der Schnittmembran an dem Trägermittel verbleibt.

Der an dem Trägermittel 2 verbliebene Zielbereich kann direkt mit Prozesschemikalien benetzt werden, welche beispielsweise in der Form von Tropfen durch ein LiquidHandling-System punktgenau aufgebracht werden können. Hierzu können die im Rahmen des Mikrodissektionsverfahrens ermittelten Koordinaten des Zielbereichs an das Liquid-Handling-System weitergegeben werden.

Der Zielbereich kann auch unter Verwendung eines sterilen Werkzeugs manuell oder automatisch von dem Trägermittel abgenommen und beispielsweise anschließend in ein Reagenzglas mit Prozesschemikalien eingebracht werden.

Wie in Fig. 4 gezeigt, kann auch ein Abdruck des Zielbereichs genommen werden, indem ein mit Prozessgel oder Gel zum Verdau beschichteter Träger 30 auf das Trägermittel mit dem daran angeordneten Zielbereich 4A-D aufgedrückt wird. Der Abdruck 31 kann beispielsweise für Matrix Assisted Laser Desorption/lonization (MALDl)-Verfahren verwendet werden.

Wie in Fig. 5 dargestellt, kann der Zielbereich auch von dem Trägermittel 2 abzentrifugiert werden. Dazu ist das Trägermittel 2 vorteilhaft als eine Membran, beispielsweise aus Polytetrafluorethylen (PTFE), ausgebildet, und die Schnittmembran 3 ist derart an dem Trägermittel 2 angebracht, dass die ausgeschnittenen Abschnitte 3A-D der Schnittmembran lateral entlang des Trägermittels verschoben werden können. Das Trägermittel 2 wird dann zusammen mit den ausgeschnittenen Abschnitten 3A-D der Schnittmembran und den ausgeschnittenen Abschnitten 4A-D des Präparats, d.h. dem Zielbereich des Präparats, zu einer Rolle 40 aufgerollt, wie in Fig. 5A und 5 B gezeigt. Um das Aufwickeln zu erleichtern, kann ein Stift 41 an einem Rand des Trägermittels 2 angebracht werden.

Die Rolle 40 wird dann, wie in Fig. 5C gezeigt, in ein Zentrifugenröhrchen 42 eingebracht, in welches eine Prozessflüssigkeit 43 eingebracht ist. Durch die beim Zentrifugieren auftretenden Zentrifugalkräfte wirken laterale Kräfte auf die ausgeschnittenen Abschnitte 3A-D der Schnittmembran, welche diese zusammen mit den darauf angeordneten ausgeschnittenen Abschnitten des Präparats zum Rand des Trägermittels hin verschieben. So wird erreicht, dass alle oder ein Großteil der ausgeschnittenen Abschnitte 4A-C des Präparats in die Prozesschemikalie 43 rutschen, wo sie beispielsweise lysiert werden. Das Trägermittel 2 wird dann entnommen, und die Lyseflüssigkeit wird weiter analysiert. Für eine mögliche Anwendung in der Proteomik kann die Lyseflüssigkeit beispielsweise aufbereitet werden, ein Proteinase-K-Verdau durchgeführt werden und das resultierende Präparat in geeignete Untersuchungsmethoden überführt werden, beispielsweise in nano-Liquid-Chromatography oder Massenspektroskopie.

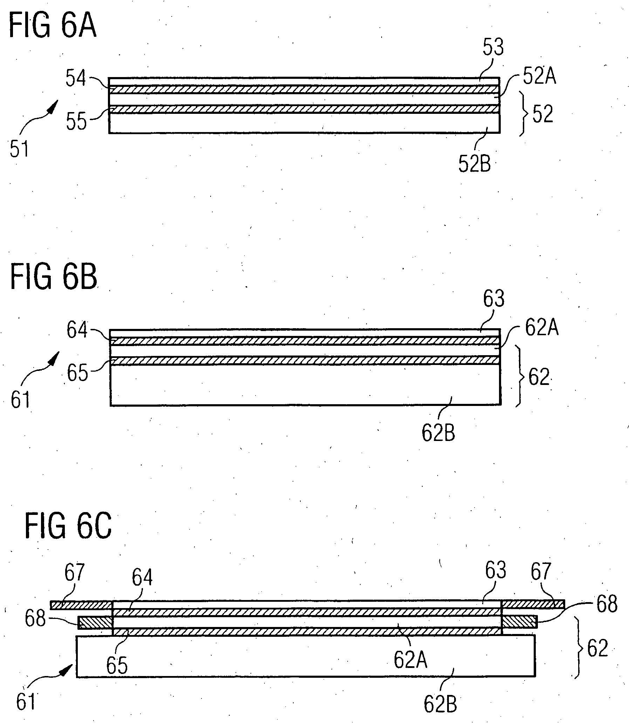

Als nächstes werden unter Bezugnahme auf Fig. 6 verschiedene Ausführungsbeispiele von Trägervorrichtungen erörtert, welche vorteilhaft bei dem erfindungsgemäßen Mikrodissektionsverfahren eingesetzt werden können. Wie unter Bezugnahme auf Fig. 1-3 bereits erläutert, umfasst die Trägervorrichtung eine Schnittmembran und ein Trägermittel. Dabei umfasst das Trägermittel vorteilhaft wiederum zwei Stützmittel, beispielsweise zwei Membranen oder eine Membran und einen Glasträger, welche durch Adhäsion oder durch einen Klebstoff oder ein anderes, zwischen sie eingebrachtes Mittel aneinander angebracht sind.

Fig. 6A zeigt ein Ausführungsbeispiel einer erfindungsgemäßen Trägervorrichtung 51 mit einer Schnittmembran 53 und einem Trägermittel 52, welches eine erste Membran 52A aus PTFE und eine zweiten Membran 52B aus PTFE umfasst. Die Membranen sind durch eine zwischen sie eingebrachte Glycerinschicht 55 miteinander verbunden. Ebenso ist zwischen die Schnittmembran 53 und die erste Membran 52A aus PTFE eine Glycerinschicht eingebracht. Die Glycerinschicht dient mehreren Zwecken. Insbesondere kann sie das Abziehen der Schnittmembran 53 von der ersten Membran 52A erleichtern und darüber hinaus unterstützen, dass bei dem Abziehen des nicht ausgeschnittenen Abschnitts der Schnittmembran die ausgeschnittenen Abschnitte der Schnittmembran an der ersten Membran 52A haften bleiben. Bei einem Abzentrifugieren des Zielbereichs, wie oben unter Bezugnahme auf Fig. 5 erläutert, verbessert die Glycerinschicht 54 die laterale Verschiebbarkeit der ausgeschnittenen Abschnitte der Schnittmembran relativ zu der ersten Membran 52A.

Figur 6B zeigt ein anderes Ausführungsbeispiel einer erfindungsgemäßen Trägervorrichtung 61 mit einer Schnittmembran 63 und einem Trägermittel 62, welches eine Membran 62A aus PTFE und einen Glasträger 62B umfasst, zwischen die wiederum eine Glycerinschicht 66 eingebracht ist.

Die in Fig. 6A und 6B dargestellten Ausführungen einer Trägervorrichtung, welche insgesamt wenigstens drei Materiallagen, beispielsweise drei Membranen oder zwei Membranen und einen Glasträger umfasst, ist insbesondere dann vorteilhaft, wenn, wie anhand von Fig. 3 erläutert, der Zielbereich ausgeschnitten wird und an dem Trägermittel verbleibt. In diesem Fall ermöglichen die in Fig. 6A und 6B dargestellten Ausführung der Trägervorrichtung, dass die Membran 52A bzw. 62A von der zweiten Membran 52B bzw. von dem Glasträger 62B abgezogen wird, und dass der an der Membran 52A bzw. 62A angeordnete Zielbereich an der abgezogenen Membran 52A bzw. 62A für eine weitere Bearbeitung oder Analyse zur Verfügung steht.

Figur 6C zeigt eine Abwandlung der in Fig. 6B gezeigten Trägervorrichtung. Dabei sind sowohl an der Schnittmembran 63 als auch an der Membran 62A seitlich hervorragende Ansätze oder Laschen 67 bzw. 68 vorgesehen. Die Laschen haften nicht an den benachbarten Lagen der Trägervorrichtung an und erleichtern so ein manuelles Abziehen der Schnittmembran 63 von der Membran 62A bzw. der Membran 62A von der Glasplatte 62B Natürlich können die Laschen analog auch bei dem in Fig. 6 A gezeigten Ausführungsbeispiel der Trägervorrichtung vorgesehen sein.

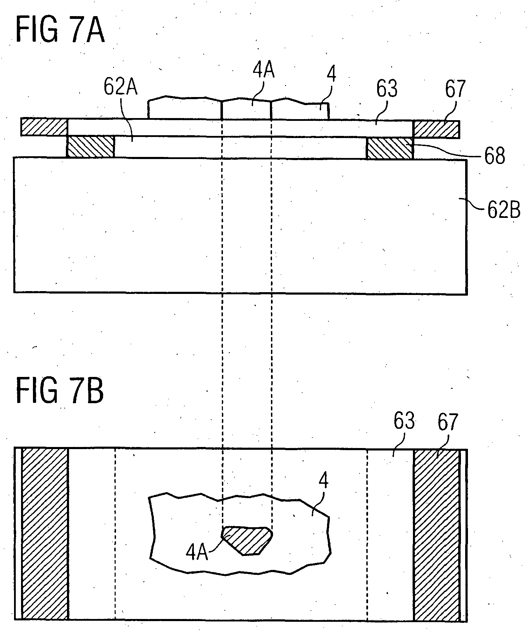

In Fig. 7 ist schematisch die Verwendung der Trägervorrichtung von Fig. 6C bei dem erfindungsgemäßen Mikrodissektionsverfahren dargestellt, wobei Fig. 7A eine Querschnittsansicht und Fig. 7B eine Draufsicht ist. Nach dem Ausschneiden des Abschnitts 4A des Präparats kann die Schnittmembran 63 leicht an einer der Laschen 67 ergriffen und von dem Trägermittel abgezogen werden.

Erfindungsgemäße Trägervorrichtungen, wie sie in Fig. 6 dargestellt sind, können jedoch nicht nur bei dem erfindungsgemäßen Mikrodissektionsverfahren eingesetzt werden. Vielmehr können sie auch bei Mikrodissektionsverfahren eingesetzt werden, bei welchen, wie beispielsweise in der WO 97/29355 A oder der WO 01/73398 A der Anmelderin beschrieben, ausgeschnittene Abschnitte oder Objekte des Präparats durch Laserbestrahlung zu einer Auffangvorrichtung transportiert werden. Auch bei dieser Verwendung ermöglichen Trägervorrichtungen mit einer Dreischichtenstruktur, wie sie in Fig. 6 gezeigt ist, dass auf dem Trägermittel verbleibende Abschnitte des Präparats einfach einer weiteren Bearbeitung zugeführt werden können.

## Patentansprüche

1. Mikrodissektionsverfahren, umfassend die Schritte
Bereitstellen einer Trägervorrichtung (1; 51; 61) mit einer laserlichtabsorbierenden Schnittschicht (3; 53; 63) und einem Trägermittel (2; 52; 62) zum Tragen der laserlichtabsorbierenden Schnittschicht,
Anbringen eines Präparats (4), insbesondere eines biologischen Präparats, an der Schnittschicht,
Auswählen eines zu separierenden Zielbereichs (4A-C; 14; 24A-B) des Präparats, und
Schneiden des Präparats (4) und der Schnittschicht (3) entlang eines Randabschnitts des Zielbereichs durch Laserbestrahlung, um die Schnittschicht in wenigstens einen ausgeschnittenen Abschnitt (3A-C) und in einen nicht ausgeschnittenen Abschnitt (3R) zu unterteilen,
**gekennzeichnet durch**
Abziehen des nicht ausgeschnittenen Abschnitts (3R) der Schnittschicht von dem Trägermittel (2; 52; 62).

2. Mikrodissektionsverfahren nach Anspruch 1,
**dadurch gekennzeichnet,**
**dass** das Schneiden des Präparats (4) und der Schnittschicht (3) durch Laserbestrahlung derart erfolgt, dass der Zielbereich (24A-B) ausgeschnitten wird, und
**dass** der Zielbereich (24A-B) bei dem Abziehen des nicht ausgeschnittenen Abschnitts der Schnittschicht (3R) an dem Trägermittel (2) verbleibt.

3. Mikrodissektionsverfahren nach Anspruch 2,
**dadurch gekennzeichnet,**
**dass** die Schnittschicht (3) verschiebbar an dem Trägermittel (2) angebracht ist, und dass zu einer weiteren Bearbeitung des Zielbereichs (24A-B) der Zielbereich (24A-B) zusammen mit dem wenigstens einen ausgeschnittenen Abschnitt (3A-B) der Schnittschicht von dem Trägermittel (2) abzentrifugiert wird.

4. Mikrodissektionsverfahren nach Anspruch 1,
**dadurch gekennzeichnet,**
**dass** das Schneiden des Präparats (4) und der Schnittschicht (3) durch Laserbestrahlung derart erfolgt, dass ein den Zielbereich (14) nicht enthaltender Abschnitt (15A-C) des Präparats ausgeschnitten wird, und
**dass** der Zielbereich (14) bei dem Abziehen des nicht ausgeschnittenen Abschnitts (3R) der Schnittschicht zusammen mit diesem von dem Trägermittel (2) abgezogen wird.

5. Mikrodissektionsverfahren nach einem der vorhergehenden Ansprüche,
**dadurch gekennzeichnet,**
**dass** zum Abziehen des nicht ausgeschnittenen Abschnitts (3R) der Schnittschicht von dem Trägermittel (2) der nicht ausgeschnittene Abschnitt (3R) der Schnittschicht von dem Trägermittel (2) manuell abgezogen wird.

6. Mikrodissektionsverfahren nach einem der vorhergehenden Ansprüche,
**dadurch gekennzeichnet,**
**dass** das Trägermittel (52; 62) ein erstes Stützmittel (52A; 62A) zum Stützen der Schnittschicht (53; 63) und ein zweites Stützmittel (52B; 62B) zum Stützen des ersten Stützmittels (52A; 62A) umfasst, und
**dass** die Trägervorrichtung (51; 61) derart ausgestaltet ist, dass das erste Stützmittel (52A; 62A) im Wesentlichen zwischen dem zweiten Stützmittel (52B; 62B) und der Schnittschicht (53; 63) angeordnet ist.

7. Mikrodissektionsverfahren nach Anspruch 6,
**gekennzeichnet durch** den Schritt
Abziehen des ersten Stützmittels (52A; 62A) von dem zweiten Stützmittel (52B; 62B) nach dem Abziehen des nicht ausgeschnittenen Abschnitts der Schnittschicht von dem Trägermittel.

8. Mikrodissektionsverfahren nach Anspruch 7,
**dadurch gekennzeichnet,**
**dass** zum Abziehen des ersten Stützmittels (52A; 62A) von dem zweiten Stützmittel (52B; 62B) das erste Stützmittel (52A; 62A) von dem zweiten Stützmittel (52B; 62B) manuell abgezogen wird.

9. Mikrodissektionsverfahren nach einem der vorhergehenden Ansprüche,
**gekennzeichnet durch** den Schritt
Erzeugen eines Übersichtsbilds des Präparats,
wobei das Auswählen des Zielbereichs (4A-C; 14; 24A-B) benutzerdefiniert oder wenigstens teilweise automatisch auf der Basis des Übersichtsbilds erfolgt.

10. Mikrodissektionsverfahren nach einem der vorhergehenden Ansprüche,
**dadurch gekennzeichnet,**
**dass** das Trägermittel (2; 52; 62) wenigstens teilweise transparent ist, und dass zum Schneides des Präparats (4) und der Schnittschicht (3; 53; 63) ein Laserstrahl (10) auf der Seite des Trägermittels (2; 52; 62) auf die Trägervorrichtung (1; 51; 61) eingestrahlt wird.

11. Mikrodissektionsverfahren nach einem der Ansprüche 1-9,
**dadurch gekennzeichnet,**
**dass** zum Schneides des Präparats (4) und der Schnittschicht (3; 53; 63) ein Laserstrahl (10') auf der Seite der Schnittschicht (3; 53; 63) auf die Trägervorrichtung (1; 51; 61) eingestrahlt wird.

12. Mikrodissektionsverfahren nach einem der vorhergehenden Ansprüche,
**dadurch gekennzeichnet,**
**dass** der Zielbereich aus einer Mehrzahl von jeweils geometrisch zusammenhängenden Zielbereichsregionen (24A, 24B) besteht, wobei das Präparat (4) und die Schnittschicht (3), vor dem Abziehen des nicht ausgeschnittenen Abschnitts (3R) der Schnittschicht, entlang eines Randabschnitts jeder der Zielbereichsregionen (24A, 24B) durch Laserbestrahlung geschnitten werden.

13. Mikrodissektionsverfahren nach einem der vorhergehenden Ansprüche,
**dadurch gekennzeichnet,**
**dass** der Zielbereich (4A-C; 14; 24A-B) nach dem Abziehen des nicht ausgeschnittenen Abschnitts (3R) der Schnittschicht von dem Trägermittel (2) molekulargenetisch analysiert wird.

14. Trägervorrichtung für ein Präparat (4), insbesondere ein biologisches Präparat, zum Separieren eines Zielbereichs (4A-C; 14; 24A-B) des Präparats (4) mittels Laserbestrahlung, umfassend
eine laserlichtabsorbierende Schnittschicht (3; 53; 63) zur Aufnahme des Präparats (4) und
ein Trägermittel (2; 52; 62) zum Tragen der Schnittschicht,
**dadurch gekennzeichnet,**
**dass** die Schnittschicht (3; 53; 63) an dem Trägermittel (2; 52; 62) abziehbar angebracht ist, und
**dass** zwischen der Schnittschicht (53; 63) und dem Trägermittel (52; 62) eine Schicht eines Gleitmittels (54;64) vorgesehen ist, welche eine Verschiebung der Schnittschicht (53; 63) relativ zu dem Trägermittel (52; 62) bei Ausüben einer Kraft parallel zu der durch die Schnittschicht definierten Ebene erleichtert.

15. Trägervorrichtung nach Anspruch 14,
**dadurch gekennzeichnet,**
**dass** das Gleitmittel Glycerin ist.

16. Trägervorrichtung nach einem der Ansprüche 14-15,
**dadurch gekennzeichnet,**
**dass** die Schnittschicht (3; 53; 63) eine Membran ist, welche ein Material umfasst oder hergestellt ist aus einem Material, das ausgewählt ist aus der Gruppe bestehend aus Polyethylennaphtalat (PEN), Polyethylenterephtalat (PET) oder Polyester (POL).

17. Trägervorrichtung nach einem der Ansprüche 14-16,
**dadurch gekennzeichnet,**
**dass** das Trägermittel (52; 62) ein erstes Stützmittel (52A; 62A) zum Stützen der Schnittschicht (53; 63) und ein zweites Stützmittel (52B; 62B) zum Stützen des ersten Stützmittels (52A; 62A) umfasst, wobei das erste Stützmittel (52A; 62A) abziehbar an dem zweiten Stützmittel (52B; 62B) angebracht ist, und
**dass** die Trägervorrichtung (1; 51; 61) derart ausgestaltet ist, dass das erste Stützmittel (52A; 62A) im Wesentlichen zwischen dem zweiten Stützmittel (52B; 62B) und der Schnittschicht (53; 63) angeordnet ist.

18. Trägervorrichtung nach Anspruch 17,
**dadurch gekennzeichnet,**
**dass** zwischen dem ersten Stützmittel (52A; 62A) und dem zweiten Stützmittel (52B; 62B) eine weitere Schicht eines weiteren Gleitmittels (55; 65) vorgesehen ist, welche eine Verschiebung des ersten Stützmittels (52A; 62A) relativ zu dem zweiten Stützmittel (52B; 62B) bei Ausüben einer Kraft parallel zu einer durch das erste Stützmittel definierten Ebene erleichtert.

19. Trägervorrichtung nach Anspruch 18,
**dadurch gekennzeichnet,**
**dass** das weitere Gleitmittel Glycerin ist.

20. Trägervorrichtung nach einem der Ansprüche 17-19,
**dadurch gekennzeichnet,**
**dass** das erste Stützmittel (52A; 62A) eine Membran ist, welche aus Polytetrafluorethylen (PTFE) ausgebildet ist.

21. Trägervorrichtung nach einem der Ansprüche 17-20,
**dadurch gekennzeichnet,**
**dass** das zweite Stützmittel eine Membran (52B) ist, welche aus Polytetrafluorethylen (PTFE) ausgebildet ist.

22. Trägervorrichtung nach einem der Ansprüche 17-21,
**dadurch gekennzeichnet,**
**dass** das zweite Stützmittel eine Glasplatte (62B) ist.

23. Trägervorrichtung nach einem der Ansprüche 17-22,
**dadurch gekennzeichnet,**
**dass** an der Schnittschicht (63) ein Ansatz (67) vorgesehen ist, welcher wenigstens teilweise seitlich über das erste Stützmittel (62A) hervorragt.

## Claims

1. Microdissection method, comprising the steps
providing a carrier device (1; 51; 61) having a cuttable layer (3; 53; 63) which absorbs laser light and a carrier means (2; 52; 62) for carrying the cuttable layer which absorbs laser light,
applying a preparation (4), in particular a biological preparation, to the cuttable layer,
choosing a target zone (4A-C; 14; 24A-B) of the preparation that is to be separated, and
cutting the preparation (4) and the cuttable layer (3) along an edge portion of the target zone by laser irradiation in order to divide the cuttable layer into at least one portion (3A-C) that has been cut out and into a portion (3R) that has not been cut out,
**characterised by**
removal of the portion (3R) of the cuttable layer that has not been cut out from the carrier means (2; 52; 62).

2. Microdissection method according to claim 1,
**characterised in that**
cutting of the preparation (4) and of the cuttable layer (3) by laser irradiation is carried out in such a manner that the target zone (24A-B) is cut out, and **in that** the target zone (24A-B) remains on the carrier means (2) when the portion of the cuttable layer (3R) that has not been cut out is removed.

3. Microdissection method according to claim 2,
**characterised in that**
the cuttable layer (3) is applied to the carrier means (2) in a displaceable manner, and **in that**,
for further processing of the target zone (24A-B), the target zone (24A-B) together with the at least one portion (3A-B) of the cuttable layer that has been cut out is removed from the carrier means (2) by centrifugation.

4. Microdissection method according to claim 1,
**characterised in that**
cutting of the preparation (4) and of the cuttable layer (3) by laser irradiation is carried out in such a manner that a portion (15A-C) of the preparation that does not contain the target zone (14) is cut out, and **in that** the target zone (14) is removed from the carrier means (2) together with the portion (3R) of the cuttable layer that has not been cut out when the portion that has not been cut out is removed.

5. Microdissection method according to any one of the preceding claims,
**characterised in that**
for removal of the portion (3R) of the cuttable layer that has not been cut out from the carrier means (2), the portion (3R) of the cuttable layer that has not been cut out is removed from the carrier means (2) by hand.

6. Microdissection method according to any one of the preceding claims,
**characterised in that**
the carrier means (52; 62) comprises a first support means (52A; 62A) for supporting the cuttable layer (53; 63) and a second support means (52B; 62B) for supporting the first support means (52A; 52B), and **in that** the carrier device (51; 61) is so designed that the first support means (52A; 62A) is arranged substantially between the second support means (52B; 62B) and the cuttable layer (53; 63).

7. Microdissection method according to claim 6,
**characterised by** the step
removing the first support means (52A; 62A) from the second support means (52B; 62B) after the portion of the cuttable layer that has not been cut out has been removed from the carrier means.

8. Microdissection method according to claim 7,
**characterised in that**
for removal of the first support means (52A; 62A) from the second support means (52B; 62B), the first support means (52A; 62A) is removed from the second support means (52B; 62B) by hand.

9. Microdissection method according to any one of the preceding claims,
**characterised by** the step
producing an overview image of the preparation,
wherein the target zone (4A-C; 14; 24A-B) is chosen in a user-defined manner or at least partially automatically on the basis of the overview image.

10. Microdissection method according to any one of the preceding claims,
**characterised in that**
the carrier means (2; 52; 62) is at least partially transparent, and **in that** for cutting the preparation (4) and the cuttable layer (3; 53; 63), a laser beam (10) is irradiated onto the carrier device (1; 51; 61) on the side of the carrier means (2; 52; 62).

11. Microdissection method according to any one of claims 1 to 9,
**characterised in that**
for cutting the preparation (4) and the cuttable layer (3; 53; 63), a laser beam (10') is irradiated onto the carrier device (1; 51; 61) on the side of the cuttable layer (3; 53; 63).

12. Microdissection method according to any one of the preceding claims,
**characterised in that**
the target zone consists of a plurality of geometrically connected target zone regions (24A, 24B), wherein the preparation (4) and the cuttable layer (3), before removal of the portion (3R) of the cuttable layer that has not been cut out, are cut by laser irradiation along an edge portion of each of the target zone regions (24A, 24B).

13. Microdissection method according to any one of the preceding claims,
**characterised in that**
the target zone (4A-C; 14; 24A-B) is analysed by molecular genetic means after the portion (3R) of the cuttable layer that has not been cut out has been removed from the carrier means (2).

14. Carrier device for a preparation (4), in particular a biological preparation, for separating a target zone (4A-C; 14; 24A-B) of the preparation (4) by means of laser irradiation, comprising
a cuttable layer (3; 53; 63) which absorbs laser light for receiving the preparation (4), and
a carrier means (2; 52; 62) for carrying the cuttable layer,
**characterised in that**
the cuttable layer (3; 53; 63) is attached to the carrier means (2; 52; 62) in a removable manner, and **in that**
between the cuttable layer (53; 63) and the carrier means (52; 62) there is provided a layer of a lubricant (54; 64) which facilitates displacement of the cuttable layer (53; 63) relative to the carrier means (52; 62) when a force is exerted parallel to the plane defined by the cuttable layer.

15. Carrier device according to claim 14,
**characterised in that**
the lubricant is glycerol.

16. Carrier device according to either claim 14 or claim 15,
**characterised in that**
the cuttable layer (3; 53; 63) is a membrane which comprises or is made of a material selected from the group consisting of polyethylene naphthalate (PEN), polyethylene terephthalate (PET) or polyester (POL).

17. Carrier device according to any one of claims 14 to 16,
**characterised in that**
the carrier means (52; 62) comprises a first support means (52A; 62A) for supporting the cuttable layer (53; 63) and a second support means (52B; 62B) for supporting the first support means (52A; 62A), wherein the first support means (52A; 62A) is attached to the second support means (52B; 62B) in a removable manner, and **in that**
the carrier device (1; 51; 61 ) is so designed that the first support means (52A; 62A) is arranged substantially between the second support means (52B; 62B) and the cuttable layer (53; 63).

18. Carrier device according to claim 17,
**characterised in that**
between the first support means (52A; 62A) and the second support means (52B; 62B) there is provided a further layer of a further lubricant (55; 65) which facilitates displacement of the first support means (52A; 62A) relative to the second support means (52B; 62B) when a force is exerted parallel to a plane defined by the first support means.

19. Carrier device according to claim 18,
**characterised in that**
the further lubricant is glycerol.

20. Carrier device according to any one of claims 17 to 19,
**characterised in that**
the first support means (52A; 62A) is a membrane formed of polytetrafluoroethylene (PTFE).

21. Carrier device according to any one of claims 17 to 20,
**characterised in that**
the second support means is a membrane (52B) formed of polytetrafluoroethylene (PTFE).

22. Carrier device according to any one of claims 17 to 21,
**characterised in that**
the second support means is a glass plate (62B).

23. Carrier device according to any one of claims 17 to 22,
**characterised in that**
there is provided on the cuttable layer (63) a projection (67) which at least partially projects laterally beyond the first support means (62A).

## Revendications

1. Procédé de microdissection, comprenant les étapes suivantes consistant à :
fournir un dispositif de support (1 ; 51 ; 61) comprenant une couche de coupe (3 ; 53 ; 63) à absorption de lumière laser et un moyen de support (2 ; 52 ; 62) servant à supporter la couche de coupe à absorption de lumière laser,
mettre en place une préparation (4), en particulier une préparation biologique, au niveau de la couche de coupe,
sélectionner une zone cible (4A - C ; 14 ; 24A -B) à séparer de la préparation,
et
couper la préparation (4) et la couche de coupe (3) le long d'une section de bord de la zone cible par irradiation laser afin de diviser la couche de coupe en au moins une section découpée (3A - C) et en une section non découpée (3R),
**caractérisé par**
le retrait du moyen de support (2 ; 52 ; 62) de la section non découpée (3R) de la couche de coupe.

2. Procédé de microdissection selon la revendication 1,
**caractérisé en ce**
**que** la coupe de la préparation (4) et de la couche de coupe (3) par irradiation laser est effectuée de telle manière que la zone cible (24A - B) est découpée, et
en ce que la zone cible (24A - B) reste au niveau du moyen de support (2) lors du retrait de la section non découpée de la couche de coupe (3R).

3. Procédé de microdissection selon la revendication 2,
**caractérisé en ce**
**que** la couche de coupe (3) est mise en place de manière à pouvoir être déplacée par coulissement au niveau du moyen de support (2), et
en ce que la zone cible (24A - B) est enlevée par centrifugation du moyen de support (2) conjointement avec la section découpée (3A- B) au moins au nombre de une de la couche de coupe afin de poursuivre l'usinage de la zone cible (24A - B).

4. Procédé de microdissection selon la revendication 1,
**caractérisé en ce**
**que** la coupe de la préparation (4) et de la couche de coupe (3) par irradiation laser est effectuée de telle manière qu'une section (15A - C), ne contenant pas la zone cible (14), de la préparation est découpée, et
en ce que la zone cible (14) est retirée du moyen de support (2) lors du retrait de la section non découpée (3R) de la couche de coupe conjointement avec ladite section.

5. Procédé de microdissection selon l'une quelconque des revendications précédentes,
**caractérisé en ce**
**que** la section non découpée (3R) de la couche de coupe est retirée manuellement du moyen de support (2) afin de retirer du moyen de support (2) la section non découpée (3R) de la couche de coupe.

6. Procédé de microdissection selon l'une quelconque des revendications précédentes,
**caractérisé en ce**
**que** le moyen de support (52 ; 62) comprend un premier moyen de soutien (52A ; 62A) servant à soutenir la couche de coupe (53 ; 63) et un deuxième moyen de soutien (52B ; 62B) servant à soutenir le premier moyen de soutien (52A ; 62A), et
en ce que le dispositif de support (51 ; 61) est configuré de telle manière que le premier moyen de soutien (52A ; 62A) est disposé essentiellement entre le deuxième moyen de soutien (52B ; 62B) et la couche de coupe (53 ; 63).

7. Procédé de microdissection selon la revendication 6,
**caractérisé par** l'étape consistant à
retirer le premier moyen de soutien (52A ; 62A) du deuxième moyen de soutien (52B ; 62B) après le retrait du moyen de support de la section non découpée de la couche de coupe.

8. Procédé de microdissection selon la revendication 7,
**caractérisé en ce**
**que** le premier moyen de soutien (52A ; 62A) est retiré manuellement du deuxième moyen de soutien (52B ; 62B) afin de retirer du deuxième moyen de soutien (52B ; 62B) le premier moyen de soutien (52A ; 62A).

9. Procédé de microdissection selon l'une quelconque des revendications précédentes,
**caractérisé par** l'étape consistant à
produire une image synoptique de la préparation, sachant que la sélection de la zone cible (4A - C ; 14 ; 24A - B) est définie sur la base des utilisateurs ou est effectuée au moins en partie de manière automatique sur la base de l'image synoptique.

10. Procédé de microdissection selon l'une quelconque des revendications précédentes,
**caractérisé en ce**
**que** le moyen de support (2 ; 52 ; 62) est au moins en partie transparent, et
en ce qu'un rayon laser (10) du côté du moyen de support (2 ; 52 ; 62) est projeté sur le dispositif de support (1 ; 51 ; 61) afin de couper la préparation (4) et la couche de coupe (3 ; 53 ; 63).

11. Procédé de microdissection selon l'une quelconque des revendications 1 - 9,
**caractérisé en ce**
**qu'**un rayon laser (10') du côté de la couche de coupe (3 ; 53 ; 63) est projeté sur le dispositif de support (1 ; 51 ; 61) afin de couper la préparation (4) et la couche de coupe (3 ; 53 ; 63).

12. Procédé de microdissection selon l'une quelconque des revendications précédentes,
**caractérisé en ce**
**que** la zone cible est constituée d'une multitude de régions de zone cible (24A, 24B) respectivement à continuité géométrique, sachant que la préparation (4) et la couche de coupe (3) sont coupées par irradiation laser le long d'une section de bord de chacune des régions de zone cible (24A, 24B) avant le retrait de la section non découpée (3R) de la couche de coupe.

13. Procédé de microdissection selon l'une quelconque des revendications précédentes,
**caractérisé en ce**
**que** la zone cible (4A - C ; 14 ; 24A - B) est analysée par des tests en génétique moléculaire après le retrait du moyen de support (2) de la section non découpée (3R) de la couche de coupe.

14. Dispositif de support pour une préparation (4), en particulier pour une préparation biologique, servant à séparer une zone cible (4A - C ; 14 ; 24A - B) de la préparation (4) au moyen d'une irradiation laser, comprenant
une couche de coupe (3 ; 53 ; 63) à absorption de lumière laser servant à recevoir la préparation (4), et
un moyen de support (2 ; 52 ; 62) servant à supporter la couche de coupe,
**caractérisé en ce**
**que** la couche de coupe (3 ; 53 ; 63) est mise en place de manière à pouvoir être retirée au niveau du moyen de support (2 ; 52 ; 62), et
en ce qu'est prévue, entre la couche de coupe (53 ; 63) et le moyen de support (52 ; 62), une couche d'un lubrifiant (54 ; 64), laquelle simplifie un déplacement- par coulissement de la couche de coupe (53 ; 63) par rapport au moyen de support (52 ; 62) lors de l'application d'une force de manière parallèle par rapport au plan défini par la couche de coupe.

15. Dispositif de support selon la revendication 14,
**caractérisé en ce**
**que** le lubrifiant est de la glycérine.

16. Dispositif de support selon l'une quelconque des revendications 14 - 15,
**caractérisé en ce**
**que** la couche de coupe (3 ; 53 ; 63) est une membrane, qui comprend un matériau ou qui est fabriquée à partir d'un matériau, qui est choisi parmi le groupe constitué du naphtalate de polyéthylène (PEN), du téréphtalate de polyéthylène (PET) ou du polyester (POL).

17. Dispositif de support selon l'une quelconque des revendications 14 - 16,
**caractérisé en ce**
**que** le moyen de support (52 ; 62) comprend un premier moyen de soutien (52A ; 62A) servant à soutenir la couche de coupe (53 ; 63) et un deuxième moyen de soutien (52B ; 62B) servant à soutenir le premier moyen de soutien (52A ; 62A), sachant que le premier moyen de soutien (52A ; 62A) est mis en place de manière à pouvoir être retiré au niveau du deuxième moyen de soutien (52B ; 62B), et
en ce que le dispositif de support (1 ; 51 ; 61) est configuré de telle manière que le premier moyen de soutien (52A ; 62A) est disposé essentiellement entre le deuxième moyen de soutien (52B ; 62B) et la couche de coupe (53 ; 63).

18. Dispositif de support selon la revendication 17,
**caractérisé en ce qu'**est prévue, entre le premier moyen de soutien (52A ; 62A) et le deuxième moyen de soutien (52B ; 62B), une autre couche d'un autre lubrifiant (55 ; 65), laquelle simplifie un déplacement par coulissement du premier moyen de soutien (52A ; 62A) par rapport au deuxième moyen de soutien (52B ; 62B) lors de l'application d'une force de manière parallèle par rapport à un plan défini par le premier moyen de soutien.

19. Dispositif de support selon la revendication 18,
**caractérisé en ce**
**que** l'autre lubrifiant est de la glycérine.

20. Dispositif de support selon l'une quelconque des revendications 17 - 19,
**caractérisé en ce**
**que** le premier moyen de soutien (52A ; 62A) est une membrane, qui est réalisée à partir de polytétrafluoroéthylène (PTFE).

21. Dispositif de support selon l'une quelconque des revendications 17 -20,
**caractérisé en ce**
**que** le deuxième moyen de soutien est une membrane (52B), qui est réalisée à partir de polytétrafluoroéthylène (PTFE).

22. Dispositif de support selon l'une quelconque des revendications 17 - 21,
**caractérisé en ce**
**que** le deuxième moyen de soutien est une plaque de verre (62B).

23. Dispositif de support selon l'une quelconque des revendications 17 - 22,
**caractérisé en ce**
**qu'**est prévu, au niveau de la couche de coupe (63), un épaulement (67), qui dépasse au moins en partie latéralement du premier moyen de soutien (62A).
